# FASCICULE DE BREVET EUROPEEN

(11) **EP 2 004 390 B1**
(45) Date de publication et mention de la délivrance du brevet: **02.03.2011**
(21) Numéro de dépôt: 07727099.9
(22) Date de dépôt: 20.03.2007
(51) Int. Cl.: B29D 99/00, B29C 70/44

(54) **PROCEDE DE REALISATION DE PANNEAUX RAIDIS EN MATERIAU COMPOSITES**
VERFAHREN ZUR HERSTELLUNG VERSTEIFTER PLATTEN AUS VERBUNDWERKSTOFF
METHOD OF PRODUCING STIFFENED PANELS MADE OF A COMPOSITE

(30) Priorité: 20.03.2006 FR 0650957
(43) Date de publication de la demande: 24.12.2008
(73) Titulaire: European Aeronautic Defence and Space Company EADS France, 75016 Paris (FR)
(72) Inventeur: CAVALIERE, Frédérick, F-78180 Montigny Le Bretonneux (FR)
(74) Mandataire: Maupilier, Didier
(86) Numéro de dépôt international: PCT/EP2007/052622
(87) Numéro de publication internationale: WO 2007/107553

(56) Documents cités:
- WO-A-95/14563
- WO-A-2005/105402
- GB-A- 2 292 332
- US-A- 5 262 121
- US-A1- 2004 103 918
- US-B1- 6 458 309

## Description

La présente invention appartient au domaine des pièces de formes complexes en matériaux composites nécessitant des moules pendant les opérations de fabrication. Plus particulièrement le procédé suivant l'invention est appliquée à des panneaux de structure plans ou présentant des courbures, simples ou doubles, comme des panneaux ou des tronçons utilisés dans la fabrication de fuselage d'aéronef, dont des éléments raidisseurs nécessitent l'utilisation de noyaux de moulage qui se trouvent emprisonnés au moment de la réalisation du panneau et doivent en être extraits au cours du processus de fabrication.

Les pièces en matériaux composites comportant des fibres dans une matrice, par exemple une résine, sont le plus souvent réalisées à l'aide de moules destinés à donner au matériau utilisé la forme de ladite pièce.

Le matériau fibreux, sec ou préalablement imprégné de résine, est déposé sur le moule dont il doit épouser la forme et subit un cycle plus ou moins complexe pouvant comporter des phases d'injection de résine et ou de mise en pression et ou de chauffage.

Après le durcissement de la résine, souvent par polymérisation, la pièce en cours de réalisation ayant atteint les propriétés mécaniques et dimensionnelles recherchées est retirée du moule.

Les panneaux raidis sont des pièces de formes complexes non seulement en raison des courbures de certaines de ces pièces mais également en raison des éléments de structure qu'ils comportent, indispensables pour assurer la forme du panneau et sa rigidité. La réalisation de ces éléments de structure panneau et sa rigidité. La réalisation de ces éléments de structure nécessite parfois d'utiliser des moules dont certains éléments peuvent se trouver emprisonnés dans la pièce au moment du démoulage. Il en est fréquemment ainsi des raidisseurs dont les formes enveloppantes nécessitent que le moule comporte des éléments particuliers, des noyaux, qui remplissent les zones creuses situées entre le panneau et le raidisseur pendant la réalisation de la pièce.

Les noyaux, qui se trouvent bloqués dès lors que la zone creuse est plus ou moins enveloppante, doivent alors être extrait sans endommager la pièce qui vient d'être réalisée. En raison des dimensions des pièces considérées et des formes généralement très allongées des raidisseurs il est difficile d'extraire les noyaux en sécurité.

Dans certains cas il est possible de réaliser des noyaux en plusieurs éléments assemblés pour pouvoir être extraits par parties. Cependant de tels noyaux sont complexes et coûteux à réaliser, ne permettent pas de répondre à toutes les formes rencontrées et les interfaces entre les différents éléments laissent des empreintes indésirables dans le matériau composite.

Une autre méthode également utilisée consiste à réaliser le noyau dans un matériau qui permet de détruire ledit noyau pour l'éliminer de la pièce par exemple par une action mécanique ou par fusion ou dissolution du matériau du noyau. Dans ce cas la difficulté est de trouver un matériau pour réaliser le noyau qui soit économiquement acceptable, soit apte à résister aux conditions parfois extrêmes rencontrées lors du processus de réalisation de la pièce en matériau composite, soit suffisamment stable pour résister aux manipulations et contraintes mécaniques et thermiques pendant la préparation de la pièce en respectant des tolérances de formes sévères et puisse être éliminé mécaniquement ou par fusion sans risque d'endommager la pièce ou soit dissout par de l'eau ou par un autre solvant compatible avec le matériau de la pièce. Ces combinaisons de conditions ne sont pas toujours possibles d'autant que la réalisation des raidisseurs exige en général des noyaux de faibles sections et de grandes longueurs qui sont difficiles à manipuler en raison de leur fragilité et dans tous les cas il est nécessaire de fabriquer autant de noyaux ou de jeux de noyaux que de pièces à réaliser ce qui est, ainsi que la phase d'élimination du noyau et de respect des conditions d'hygiène et de sécurité en vigueur, coûteux sur le plan industriel.

Une autre méthode connue consiste à réaliser un noyau dans une matière qui soit suffisamment déformable pour que ledit noyau puisse être extrait par déformation. Ainsi un noyau réalisé dans un élastomère, éventuellement comportant des évidements, pourra être extrait par étirement et striction au travers de l'ouverture généralement existante à l'extrémité du raidisseur. Un défaut des noyaux utilisant une matière déformable est leur instabilité dimensionnelle due à leur faible rigidité qui ne permet pas d'obtenir la reproduction, dans les tolérances exigées par certaines applications, des résultats lors de la fabrication des pièces. De plus le faible coefficient de striction ne permet pas de résoudre les situations avec des variations significatives de la section du noyau ou des courbures importantes. De plus en raison de la surface de contact entre le noyau allongé et les parois de la pièce les efforts de frottement rendent l'extraction difficile et risquent d'endommager la pièce.

Pour réaliser un noyau à la fois rigide et qui puisse être extrait de la pièce après durcissement, une solution consiste à réaliser une vessie dans un matériau en élastomère, laquelle vessie est remplie d'un matériau granulaire. Dans une première étape la vessie, dont la forme est de préférence réalisée suivant la forme recherchée du noyau, est placée dans un moule contre les parois duquel elle est appliquée au moyen d'une dépression entre les parois de la vessie et celles du moule correspondant à la forme voulue du noyau. Après le remplissage de la vessie par le matériau granulaire, la dépression entre les parois du moule et de la vessie est interrompue et l'intérieur de la vessie est mis au vide ce qui a pour effet de compacter et de bloquer sous les forces d'écrasement de la vessie soumise à la pression atmosphérique le matériau granulaire contenu par ladite vessie, donnant ainsi à cette dernière à la fois une forme stable et la rigidité recherchée pour servir de support à la pose de tissus pré-imprégnés de résine. Après durcissement de la résine, la mise au vide à l'intérieur de la vessie est supprimée et la vessie est ouverte pour extraire le matériau granulaire. L'enveloppe vidée de la vessie est alors suffisamment déformable pour être retirée de la pièce en matériau composite dans laquelle elle est emprisonnée. Le brevet US 5262121 décrit un tel procédé de réalisation de tuyauteries complexes en matériau composite. Un problème qui se pose avec ce type de réalisation est la qualité dimensionnelle de la pièce réalisée qui peut être insuffisante. Cette qualité est en effet affectée par les variations de dimensions effectives du noyau après la mise au vide ainsi que par celles dues aux manipulations lors de sa mise en place, aux cycles de chauffage et de pression généralement utilisés pour la polymérisation de la résine en raison notamment du fait que le procédé ne met en oeuvre aucune autre forme de référence pour la pièce que celle du noyau.

Le document US 2004/103918 divulgue un procédé de réalisation d'un panneau raidi en matériau composite selon le préambule de la revendication 1. Dans le cas des noyaux de grandes dimensions utilisés pour la réalisation des panneaux raidis la sensibilité aux déformations est accrue par la dilatation des pièces au cours des variations de températures mises en oeuvre par les procédés de réalisation des pièces en matériau composite. Ces dilatations peuvent générer des écarts de forme importants et des pressions non homogènes génératrices de défauts dans la pièce réalisée.

Si ces variations de dimensions et autres défauts ne sont pas gênants pour des pièces composites relativement massives de grande diffusion comme par exemples des tuyauteries de conditionnement d'air, ils sont généralement inacceptables pour la réalisation de pièces composites hautes performances, comme par exemple des pièces structurales avec des tolérances géométriques serrées, destinées à des assemblages précis et dont les caractéristiques dimensionnelles sont souvent critiques de même que la santé structurale du matériau de la pièce finie qui ne doit pas contenir de bulles de gaz ou porosités, ni de poches de résine, ni de fibres « sèches », phénomènes qui conduisent à des taux de rebut importants en fabrication et sont autant de sources de délamination lorsque la pièce est soumise à des sollicitations en service ce qui conduit à surdimensionner les pièces dont la résistance structurale est essentielle et entraîne une augmentation de masse pénalisante, en particulier dans les applications aéronautiques.

Un défaut également présent dans les procédés connus mettant en oeuvre des noyaux est lié au fait qu'aucun de ces procédés ne prend en compte la variation de l'épaisseur du matériau composite au cours du processus de durcissement. Lesdits procédés connus utilisent des noyaux dont des caractéristiques de rigidité et ou de possibilité d'extraction sont recherchées mais dont les dimensions ne répondent pas aux besoins dans les différentes étapes des procédés de réalisation des matériaux composites aux cours desquelles l'épaisseur du matériau composite évolue.

Afin de réaliser des panneaux raidis en matériau composite dont les caractéristiques géométriques et structurales soient compatibles avec des applications de type aéronautique, le procédé suivant l'invention et conformément à la revendication 1 met en oeuvre un noyau de moulage apte à remplir les zones devant rester creuses entre le panneau et les raidisseurs.

Un panneau raidi en matériau composite comporte une peau et au moins un raidisseur, ledit matériau composite comportant des fibres enrobées d'une résine passant d'un état pâteux ou liquide à un état solide au cours d'une phase de durcissement, qui déterminent au moins une forme en creux allongée, c'est à dire dont une dimension, la longueur, est grande devant les autres dimensions sensiblement orthogonales à la longueur, formée par des surfaces du au moins un raidisseur et de la peau. Suivant le procédé, un volume correspondant en tout ou partie à la au moins une forme en creux est occupé par un noyau, ledit noyau comportant une vessie en matériau souple présentant une surface extérieure délimitant un volume du noyau dont les formes et les dimensions sont en accord avec le volume de la forme en creux et présentant une surface intérieure déterminant un volume de la vessie, lequel volume est rempli d'un matériau solide granulaire choisi parmi des matériaux ayant un coefficient de dilatation thermique sensiblement égal au coefficient de dilatation thermique du matériau composite utilisé pour réaliser le panneau raidi. Ainsi lors des variations de température au cours de la fabrication du panneau en matériau composite, telle qu'une cure thermique utilisée pour le durcissement du matériau composite, le noyau, de forme complexe et réutilisable, et le panneau raidi se dilatent et se contractent simultanément et avec des allongements comparables pour éviter d'introduire des contraintes et des déformations dans le panneau raidi.

Afin de placer précisément le noyau et d'éviter des déformations locales du panneau, le noyau est réalisé avec une section de dimensions inférieures à celle de la forme en creux voulue dans le panneau pour prendre en compte la diminution d'épaisseur du matériau composite au cours de la phase de durcissement. Plus précisément, le noyau est réalisé avec des dimensions correspondant à celles de la forme en creux dans le matériau composite avant la phase durcissement.

Avantageusement le matériau solide granulaire utilisé pour remplir la vessie est un matériau ou un mélange de matériaux dont les coefficients de dilatation thermiques sont compris entre 3 10E-6 par Kelvin et 9 10E-6 par Kelvin, par exemple un verre borosilicate ou un alliage fer-nickel type Invar à faible coefficient de dilatation.

Pour réaliser un noyau qui puisse être manipulé sans se déformer lorsqu'il est placé dans le moule, une pression **Pn** d'un fluide inter-granulaire contenu dans la vessie est au cours d'une étape de préparation du noyau diminuée de telle sorte que les parois de la vessie compactent le matériau solide granulaire sous l'effet des forces d'écrasement de la vessie liées à une pression, telle que la pression atmosphérique, s'exerçant sur la surface extérieure de la vessie en matériau souple et confèrent au noyau une forme stable.

Pour éviter des déformations locales du noyau et donc du panneau sous l'effet des pressions exercées par le procédé de réalisation du matériau composite et améliorer la santé matière du panneau, la pression **Pn** d'un fluide inter-granulaire contenu dans la vessie est augmentée pendant la phase de durcissement de la résine de telle sorte que la pression dans le noyau **Pn** équilibre sensiblement les forces exercées par des moyens de mise en pression du matériau composite de telle sorte que les fibres du matériau composite soient comprimées sans être déformées.

Par exemple lorsque le procédé de réalisation du matériau composite utilise une vessie extérieure soumise à une pression **Pa** d'autoclave, la pression **Pn** est augmentée à une valeur sensiblement égale à la pression **Pa**.

Dans un montage simple, le fluide inter-granulaire est soumis à la pression d'autoclave **Pa** de telle sorte que **Pn** soit sensiblement égal à **Pa**.

Pour tenir compte de l'épaisseur non négligeable de la vessie du fait de la faible section du noyau, la pression **Pn** du fluide inter-granulaire est égale à la pression **Pa** d'autoclave corrigée pour compenser la différence entre la surface extérieure du noyau soumise à la pression d'autoclave et la surface intérieure de la vessie soumise à la pression du fluide inter-granulaire en vis à vis de ladite surface extérieure soumise à la pression d'autoclave.

Lorsque que le procédé de réalisation d'un matériau composite utilise une résine injectée tel que le procédé RTM, la pression **Pn** du fluide inter-granulaire est augmentée à une valeur au moins égale à la pression d'injection de la résine dans le moule fermé.

Pour améliorer l'homogénéité de la température dans le moule, en particulier lorsque la résine est durcie lors d'une cure thermique, le noyau est rempli d'un matériau solide granulaire et ou d'un fluide interstitiel choisis avec un coefficient de conductivité thermique apte à assurer la diffusion de la chaleur et l'homogénéité de la température pendant la cure thermique.

Lorsque le panneau raidi en matériau composite est réalisé, avantageusement la pression **Pn** dans la vessie du noyau est diminuée à une valeur inférieure à la pression atmosphérique après avoir été vidée, au moins partiellement, du matériau solide granulaire.

Suivant la géométrie des formes réalisées et en particulier des raidisseurs, le noyau est prisonnier, au moins sur une partie de sa longueur, d'un volume ayant une section fermée délimitée par une surface intérieure de la section d'un raidisseur et éventuellement une partie de la face de la peau sur laquelle est fixé le raidisseur, ou bien le noyau est prisonnier, au moins sur une partie de sa longueur, d'un volume ayant une section ouverte délimitée par une surface de la section d'un raidisseur et éventuellement une partie de la surface de la peau sur laquelle est fixé le raidisseur.

La présentation détaillée d'un exemple de mise en oeuvre du procédé suivant l'invention est réalisée en références aux dessins qui représentent:
Figure la : .un panneau raidi au moyen de raidisseurs à profil dit Ω;
Figure 1b et 1c : .des détails du panneau raidi de la figure la montrant un exemple de forme d'un raidisseur suivant sa longueur et un exemple de section du panneau au droit d'un raidisseur;

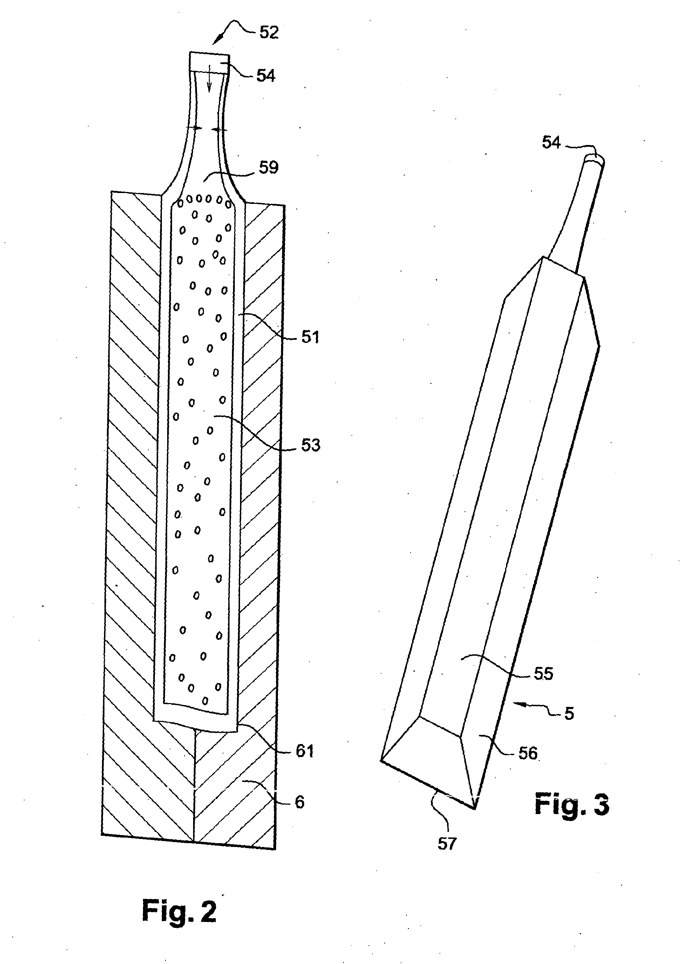

Figure 2 : .un noyau en cours de préparation dans un moule de mise en forme du noyau;
Figure 3 : un noyau prêt à être utilisé pour la réalisation d'un panneau raidi;
Figure 4a, 4b, 4c : trois étapes de réalisation du panneau suivant le procédé mettant en oeuvre un noyau conforme au noyau de la figure 3;
Figures 5: un panneau réalisé suivant l'invention avant extraction du noyau;
Figure 6a, 6b, 6c : différentes sections, non limitatives, de raidisseurs pour lesquels le procédé suivant l'invention est avantageusement mis en oeuvre.

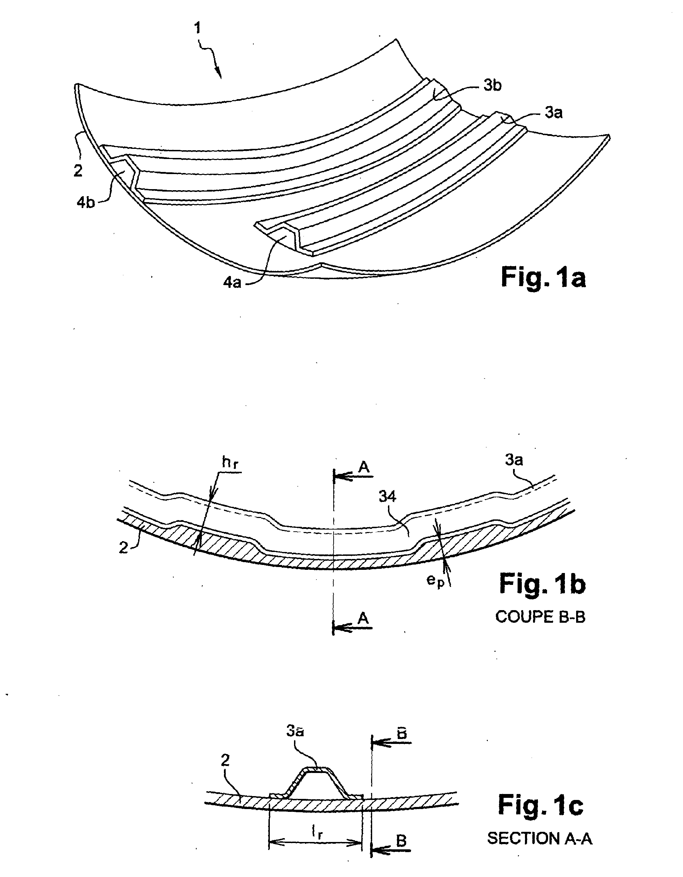

Les figures 1a, 1b et 1c représentent à titre d'illustration non limitative un panneau raidi en matériau composite comportant une peau 2 et des raidisseurs 3a, 3b sur une des faces de la peau, avantageusement réalisé suivant le procédé de l'invention.

Les matériaux composites auxquels s'adresse préférentiellement l'invention sont les matériaux comportants des fibres, telles que par exemple des fibres de verre, de carbone ou d'aramide type Kevlar®, emprisonnées dans une matrice organique, telle que par exemple une résine polyester ou une résine époxy, utilisés pour la réalisation de panneaux et de pièces comportant des formes plus ou moins accidentées.

Ces genres de matériaux composites sont aujourd'hui largement utilisés dans de nombreux secteurs industriels, en particulier dans l'aéronautique pour la réalisation de pièces utilisées dans des structures d'aéronef devant supporter des charges importantes.

La peau 2 est une structure de faible épaisseur en regard de ses autres dimensions, la longueur et la largeur. La 2 peut avoir une épaisseur **ep** sensiblement constante, mais en général l'épaisseur est souvent différente suivant le point considéré à la surface du panneau 1 comme illustré sur le détail 1b afin d'obtenir une résistance structurale adaptée aux efforts à transmettre par la peau 2. En pratique cette épaisseur reste toujours petite devant la longueur et la largeur.

Contrairement à la peau, un raidisseur 3a, 3b est un élément de structure de forme allongée, c'est à dire qui présente une dimension, la longueur, grande devant les dimensions transversales, la largeur **Ir** et la hauteur **hr** du raidisseur. La largeur **Ir** correspond à la dimension transversale du raidisseur parallèlement au plan de la peau lorsque le raidisseur est fixé à la peau et la hauteur **hr** du raidisseur à la dimension perpendiculaire à ce plan. Par plan on entend le plan tangent au point considéré car souvent les panneaux raidis comportent des courbures, simples ou doubles.

Sur la figure 1a sont présentés des raidisseurs 3a, 3b en Ω à titre d'illustration non limitative. De nombreuses formes de raidisseurs peuvent être utilisées. Les raidisseurs comportent en général une ou deux semelles et au moins une âme qui leurs donnent une section caractéristique souvent identifiée par une lettre caractérisant le mieux cette section. On trouve par exemple des raidisseurs en Ω, en **Z**, en **I**, en **C**, en **T.**

En outre un raidisseur est fixé à la peau sur la plus grande partie de sa longueur et suit généralement la surface de la peau. De ce fait comme il est illustré sur le détail de la figure 1b non seulement le raidisseur est globalement courbe en conformité avec les courbures du panneau mais il présente localement des déviations 34 par exemple lorsque l'épaisseur **ep** de la peau évolue.

Par raidisseur, il faut également comprendre tous les éléments de structures de formes allongées, reliés au panneau, participant à la stabilité structurale du panneau et ou à la résistance de la structure dans laquelle le panneau doit être utilisé. Suivant leurs formes et leurs emplacements ces éléments de structures sont parfois nommés raidisseurs, longerons, nervures ou cadres. Dans la suite de l'exposé le terme raidisseur sera utilisé pour désigner indifféremment tous les éléments de structures allongés fixés à un panneau pour participer à sa rigidité et ou à sa résistance structurale.

Pour réaliser le panneau 1 illustré sur la figure 1a on utilise au moins un noyau 5 qui rempli la forme en creux 4a, 4b du raidisseur 3a, 3b pendant certaines opérations de fabrication du panneau.

Le noyau 5 est réalisé au moyen d'une vessie 51 souple en élastomère, par exemple en résine silicone, dont l'enveloppe est réalisée par des moyens conventionnels, par exemple par moulage ou par injection, avec une forme et des dimensions extérieures les plus proches que possible de la forme et des dimensions voulues pour le noyau. Ces forme et dimensions du noyau correspondent sensiblement aux forme et dimensions de la forme en creux 4a, 4b qui doit être formée dans le panneau après le retrait du noyau qu'il convient de corriger pour tenir compte du foisonnement du matériau composite non durci.

En effet le noyau 5 doit être mis en place dans un volume qui est déterminé par le matériau composite non durci dont l'épaisseur, qui n'a pas encore été soumis aux pressions du procédé de réalisation, est supérieure à l'épaisseur qui sera obtenue après durcissement du matériau composite. Le foisonnement est variable suivant le procédé utilisé pour déposer les fibres, c'est un phénomène connu et parfaitement mesurable. Il représente en général quelques pour cent sur l'épaisseur du matériau composite qui sont suffisants pour gêner la mise en place du noyau et provoquer des défauts inacceptables sur le panneau raidi si le noyau est réalisé avec les dimensions exactes de la forme en creux qui doit être réalisé. Afin de compenser le phénomène du foisonnement du matériau composite non durci, le noyau est donc avantageusement réalisé avec des dimensions inférieures, fonction de la valeur du foisonnement, aux dimensions de la forme en creux à créer

La vessie comporte au moins une ouverture 52 à au moins une de ses extrémités qui reste accessible lorsque le noyau rempli la forme en creux du panneau. Pour réaliser le noyau, la vessie 51 est placée dans un outillage 6 de mise en forme qui comporte une forme en creux 61, qui reproduit sensiblement la forme en creux 4a, 4b qui doit être occupée par le noyau 5 pendant la réalisation du panneau, puis est remplie par l'ouverture 52 avec un matériau solide granulaire 53.

L'outillage 6 consiste par exemple en un moule qui comporte le cas échéant deux ou plusieurs éléments pouvant être déboîtés les un des autres pour placer la vessie dans la forme en creux 61 et pour extraire le noyau 5 prêt à être utilisé.

Lorsque la vessie 51 est remplie avec le matériau solide granulaire 53, une dépression est créée à l'intérieur de la vessie par une aspiration d'un fluide inter-granulaire 59, par exemple de l'air si le remplissage avec le matériau solide granulaire est réalisé dans l'atmosphère. De façon alternative d'autres gaz, mélanges gazeux ou des liquides sont utilisés comme fluide lintergranulaire. La dépression, créée par des moyens non représentés, par exemple une pompe à vide, est entretenue dans la vessie 51 soit par maintien d'une prise de mise en dépression, soit plus simplement en obturant l'ouverture par laquelle est créée la dépression par un moyen de fermeture 54 étanche au fluide inter-granulaire.

Sous l'effet de la pression atmosphérique à l'extérieur de la vessie 51, ladite vessie est soumise à des forces d'écrasement qui compriment et compactent, en raison de la souplesse du matériau en élastomère de la paroi de la vessie 51, les éléments de matériau solide granulaire 53. Ce compactage a pour effet de stabiliser la forme du noyau qui peut être sorti du moule 6 en conservant la forme qu'il a acquise dans l'empreinte en creux 61 dudit moule.

En raison de son élancement important, rapport de sa longueur à sa section, le noyau 5 conserve une certaine souplesse, très relative, qui permet de placer ledit noyau dans la position qu'il doit occuper lors de la réalisation du panneau en bénéficiant d'une possibilité de déformation, réduite mais réelle, en particulier pour les grandes courbures.

Lorsque le raidisseur comporte des variations de section et ou des courbures 34 localement relativement petites, le noyau 5 sorti du moule 6 reproduit ces formes particulières dans la mesure où la souplesse résiduelle dudit noyau ne permet pas de corriger facilement la forme pour de telles variations de formes.

Dans un mode de réalisation du panneau raidi 1 on utilise un moule 8 dont la surface 81 présente la forme générale voulue pour la peau 2 et qui comporte au moins une forme en creux 82 correspondant à l'empreinte du au moins un raidisseur 3a, 3b qui doit être réalisé sur une face de la peau située du côté du moule 8 pendant la réalisation du panneau.

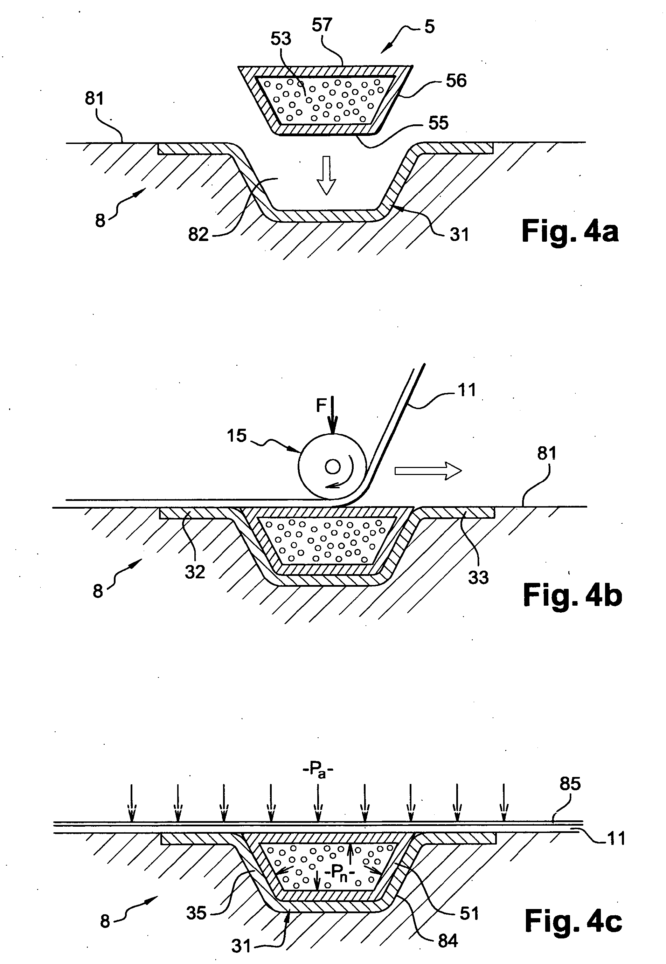

Dans une première étape présentée figure 4a des fibres 31, par exemple des fibres pré-imprégnées, devant constituer le au moins un raidisseur sont déposées dans la forme en creux 82. Les fibres 31 sont en général déposées dans la forme en creux 82 sous la forme de préformes réalisées préalablement par des procédés connus et non représentés, par exemple au moyens de machines à draper qui déposent sur des supports de formes adaptées les fibres par mèches ou par plis successifs sous forme de bandes plus ou moins larges et plus ou moins longues, en respectant l'orientation des fibres et le nombre de plis prévus. Lorsque tous les plis prévus pour former le au moins un raidisseur ont été déposés sur le moule 8, le noyau 5 réalisé comme décrit précédemment est placé dans la forme en creux 82 de telle sorte que les fibres 31 déposées se retrouvent entre le moule 8 et le noyau 5.

Dans une seconde étape présentée figure 4b, les fibres 11 de la peau sont déposées sur la surface 81 du moule 8 et recouvrent d'une part les fibres 32, 33, déposées pour former une semelle du au moins un raidisseur, dans les zones de contact entre le au moins un raidisseur 3a, 3b et d'autre part la peau 2 et d'autre part le noyau 5. En raison de sa rigidité obtenue notamment par le matériau solide granulaire 53 compacté contenu dans la vessie, le noyau 5 est apte à subir les efforts **F** exercés par les moyens, schématisé par une tête de dépose 15, de dépose des plis de fibres 11 de la peau, efforts qui sont en général nécessaires pour obtenir des fibres compactées les unes aux autres, condition nécessaire à l'obtention d'un bon placement des plis, d'une bonne orientation des fibres et d'une bonne santé du matériau composite fini. Le placement correct des fibres est également obtenu par le choix d'un noyau qui tient compte des dimensions de l'emplacement rempli par ledit noyau au moment du dépôt des fibres et est apte à reconstituer la surface sur laquelle sont déposées les fibres de la peau 2 sans déformation notable.

Dans une troisième étape présentée sur la figure 4c, une pression **Pa** est appliquée sur la surface des fibres 11 déposées opposée à la surface en contact avec le moule 8 et, de façon connue, la température est augmentée suivant un cycle déterminé pour provoquer le durcissement de la résine qui imprègne les fibres. Cette pression **Pa** ou pression autoclave est par exemple obtenue au moyen d'une vessie 85 qui recouvre les fibres déposées sur le moule et qui est soumise à une pression extérieure éventuellement complétée par une mise en dépression de l'espace compris entre la vessie extérieure 85 et le moule 8, c'est à dire l'espace dans lequel se situent les fibres 11. En outre, afin d'éviter que la pression autoclave ne déforme la peau 2, pendant le durcissement de la résine, au niveau du raidisseur 3a, 3b par un écrasement local du noyau 5 en raison de la souplesse de la paroi de ladite vessie 51 et ou en raison de l'enfoncement du noyau 5 dans l'empreinte 82 du raidisseur du fait du tassement des fibres 31 du raidisseur, ce qui aurait pour effet de créer à la fois une perte locale des propriétés structurales de la peau 2 et des défauts géométriques à la surface du panneau raidi incompatibles avec certaines applications comme les applications dans lesquelles la surface est en contact avec un écoulement aérodynamique, la pression **Pn** du fluide inter-granulaire contenu dans la vessie 51 est augmentée jusqu'à une valeur apte à compenser la pression autoclave **Pa** qui s'exerce au travers des parois de la vessie 85 et à éviter la déformation locale de la peau 2.

Cette augmentation de la pression **Pn** dans la vessie 51 a pour effet de corriger le volume du noyau 5 dont les dimensions ont été de préférence choisies pour tenir compte du foisonnement du matériau composite non durci et de sa diminution d'épaisseur au cours de son durcissement sous l'effet des pressions appliquées.

Une manière de réaliser l'augmentation de la pression **Pn** consiste à raccorder le volume intérieur de la vessie 51 contenant le fluide inter-granulaire 59 aux moyens de génération de la pression autoclave pour augmenter la pression **Pn** dans la vessie en même temps que la pression autoclave **Pa** est augmentée.

La pression **Pn** du fluide intergranulaire peut être choisie égale à la pression autoclave **Pa**.

Toutefois, les vessies 51 de noyaux pour raidisseurs ont, conformément aux caractéristiques des raidisseurs, des sections relativement petites. De ce fait, les dimensions caractéristiques des sections de la zone évidée de la vessie, notamment la largeur **Ii**, sont sensiblement inférieures à celles des sections extérieures correspondantes, la largeur **Ie**, en raison de l'épaisseur de la vessie en élastomère qui n'est plus négligeable devant les autres dimensions des sections. En raison de cette différence sensible de dimensions intérieures et extérieures de la vessie du noyau, la pression sur la surface extérieure générée par la pression **Pn** dans la vessie est plus faible que la pression intérieure **Pn**, et donc est plus faible que la pression **Pa** si le volume intérieur de la vessie est soumis à la pression autoclave.

Avantageusement la pression **Pn** appliquée à l'intérieur de la vessie 51 pour compenser les forces dues à la pression d'autoclave **Pa** sera corrigée pour tenir compte de cet effet. Par exemple, un coefficient multiplicateur tenant compte de l'épaisseur de la vessie 51 est appliqué à la pression d'autoclave **Pa** pour obtenir une valeur de la pression **Pn** dans le noyau qui restitue une pression apparente sensiblement égale à **Pa** sur la face extérieure du noyau soumise à la pression autoclave. La pression dans le noyau est de préférence asservie à la valeur voulue lorsque la pression autoclave est appliquée. La pression dans le noyau est avantageusement obtenue automatiquement en raccordant le volume intérieur de la vessie du noyau à la pression autoclave au moyen d'un multiplicateur de pression à piston.

La pression **Pn** a également pour effet de comprimer les fibres de l'âme 35, 36, 37 du raidisseur sur les surfaces correspondantes 84, 85 de l'empreinte 82 dans le moule 8, ce qui n'est que partiellement réalisé par les forces que la pression autoclave **Pa** exerce sur le noyau 5 qui appui sur les âmes 35 inclinées des raidisseurs, et n'est pas réalisé si les surfaces 85 de l'empreinte contre lesquelles prennent appui les âmes des raidisseurs sont proches de la normale à la surface de la peau 2.

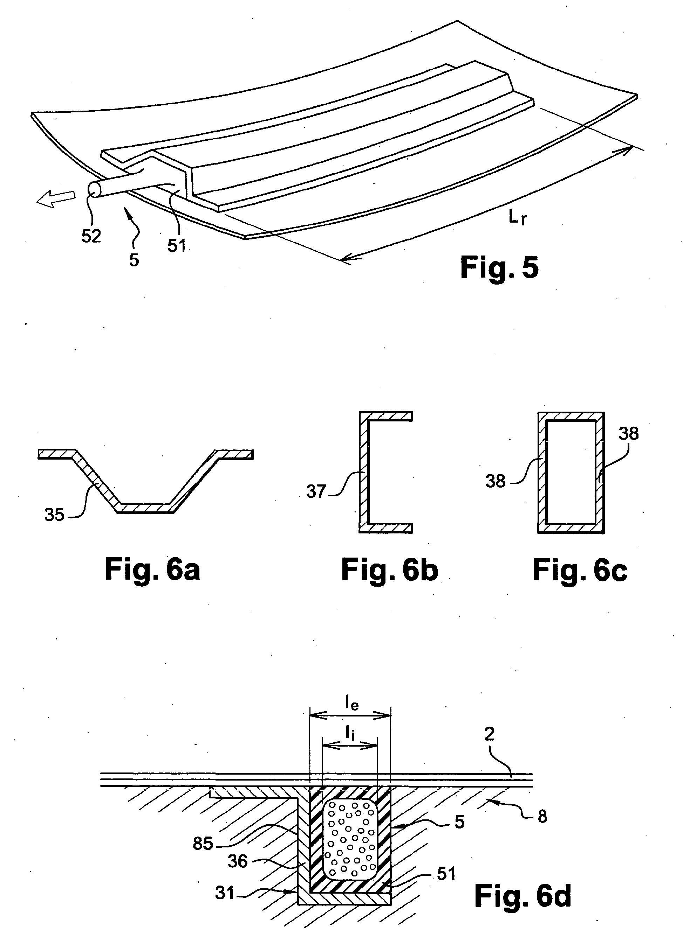

Dans une quatrième étape, figure 5, après le durcissement de la résine, la pression autoclave **Pa** et la pression **Pn** dans la vessie 51 sont équilibrées avec la pression de travail, en général la pression atmosphérique, et le panneau raidi 1 est dégagé du moule 8.

Le noyau 5 est alors vidé du matériau solide granulaire 53 qu'il contient par l'ouverture 52, au moins partiellement, de sorte que la vessie 51 devienne suffisamment déformable pour être retirée par une extrémité accessible du raidisseur. Avantageusement une dépression est créée dans la vessie 51 vidée du matériau solide granulaire ce qui a pour effet de provoquer un écrasement de ladite vessie sous l'effet de la pression atmosphérique qui facilite le décollement des parois 55, 56, 57 de la vessie des surfaces de la forme en creux 4a, 4b du raidisseur et qui facilite l'extraction de la vessie.

Le matériau solide granulaire 53 utilisé pour le remplissage de la vessie 51 est formé par exemple avec des éléments de métal ou de verre. Les éléments du matériau solide granulaire sont de préférence:
- de dimensions suffisamment petites pour remplir la vessie y compris dans les zones où éventuellement le noyau présente une section réduite:
- de formes suffisamment émoussées, par exemple sphériques, pour que les éléments s'écoulent aisément lors du remplissage de la vessie ou lorsque celle ci est vidée desdits éléments et afin de faciliter le drainage et la circulation du fluide inter-granulaire entre lesdits éléments lors de la mise en dépression ou lors de la mise en pression de la vessie;
- réalisés avec un matériau choisi en fonction de son coefficient de dilatation thermique pour respecter la dilatation du panneau raidi lors de sa fabrication;
- réalisés dans un matériau choisi en fonction de son coefficient de conductivité thermique lorsqu'une bonne conduction de la chaleur dans le moule est recherchée.

En raison de la forme très allongée des noyaux 5 utilisés pour la réalisation de panneau raidis, le choix d'un matériau solide granulaire 53 ayant un coefficient de dilatation thermique adapté est essentiel car, si la dilatation dans le sens de la largeur **lr** et de la hauteur **hr** du noyau 5 est négligeable en raison des dimensions en jeu relativement faibles, la dilatation devient critique sur la longueur **Lr** du noyau. Par exemple un matériau économique et relativement léger comme l'aluminium, avec un coefficient de dilatation de 24 10E-6 par Kelvin, utilisé pour remplir une vessie induit, au cours d'une cure thermique dans laquelle la température est augmentée de 200 Kelvin, un allongement du noyau de l'ordre de 5mm par mètre. Un tel allongement est totalement incompatible avec la réalisation d'une pièce en matériau composite de dimensions pouvant atteindre plusieurs mètres tout en respectant les qualités exigées pour une structure aéronautique.

Le matériau solide granulaire 53 est donc avantageusement sélectionné parmi des matériaux dont le coefficient de dilatation est le plus proche du coefficient de dilatation du matériau composite utilisé pour la réalisation du panneau raidi.

Les matériaux composites ont en général un coefficient de dilatation thermique faible, de l'ordre de 3 à 5 10E-6 par Kelvin. Dans ce cas on choisit de préférence un verre borosiiicste, verre riche en silice ayant un coefficient de dilatation de l'ordre de 3,5 10E-6 par Kelvin, ou un alliage de fer riche en nickel type « Invar » à faible coefficient de dilatation comme matériau solide granulaire 53.De cette manière le matériau composite du panneau raidi 1 et le noyau 5 se dilatent et se contractent conjointement avec les variations de la température ce qui évite d'introduire des déformations et des contraintes résiduelles non désirées dans le panneau.

Le procédé décrit pour la réalisation d'un panneau raidi en matériau composite à partir de fibres préimprégnées déposées sur un moule comportant une forme est aisément adapté à d'autres procédés de réalisation de pièces en matériau composite.

Par exemple la pression exercée au moyen d'une vessie extérieure 85 et d'une pression autoclave **Pa** est dans certains cas réalisée par une contre-forme qui peut être rigide ou être réalisée, au moins en partie avec un élastomère. Dans ce cas la pression **Pn** dans le noyau est augmentée pendant la phase de durcissement de la résine à une valeur proche de la pression recherchée pour appliquer la contre-forme dans le procédé.

Par exemple dans certains procédés par transfert de résine dit RTM les fibres sont déposées sèches, c'est à dire sans avoir été pré-imprégnées avec une résine, dans un moule, en général une forme et une contre-forme qui sont assemblées lorsque les fibres sont en place, et la résine est injectée dans le moule dont les parois déterminent précisément les formes du panneau. Dans ce cas, la pression **Pn** dans la vessie 51 est choisie de préférence au moins égale à la pression de la résine dans le moule ou supérieure en fonction de la compression recherchée pour les fibres dans la zone du raidisseur.

Le procédé suivant l'invention décrit pour un raidisseur dit en Ω est applicable aux autres formes de raidisseur car d'une part les problèmes de stabilité dimensionnelle du noyau que résout l'invention sont toujours critiques et la génération d'une contrepression dans le noyau pour contrer la pression exercée sur la peau est toujours nécessaire pour garantir la qualité du matériau composite dans la zone du raidisseur, même si la peau 2 n'est directement en contact avec ie noyau 5 comme dans l'exemple des raidisseurs des figures 6b et 6c. Comme illustré sur la figure 6d, la réalisation d'un noyau ayant la forme adaptée au volume qui doit être rempli pendant la réalisation de la pièce permet la mise en oeuvre du procédé. Il convient de noter que le procédé est avantageusement appliqué même lorsque les formes en creux ne sont pas totalement ou pas du tout fermées car les noyaux rigides ou en élastomères ne permettent pas d'appliquer une contre-pression apte à éviter une déformation locale de la peau ou du raidisseur et car l'extraction du noyau sans endommager le panneau peut être rendue difficile voire impossible en raison des variations de section des raidisseurs sur les grandes longueurs et ou des formes particulières du raidisseur, par exemple un vrillage lié à une courbure du panneau, et ou des variations d'épaisseur de la peau. De plus la pression **Pn** à l'intérieur de la vessie permet de créer une pression parfaitement contrôlée sur les âmes 36, 37, 38 des raidisseurs qui, proches de la normale à la surface locale de la peau, ne sont pas comprimées par la pression autoclave ou de contre-moule.

Avantageusement lorsque la forme en creux déterminée par le raidisseur et la peau n'est pas totalement fermée comme dans les exemples des figures 6b et 6d, le noyau suivant l'invention est extrait une fois vidé du matériau solide granulaire par l'ouverture latérale longitudinale si une telle ouverture est accessible.

Le procédé peut également être appliqué lorsque le au moins un raidisseur est réalisé en matériau composite durci avant d'être déposé dans l'empreinte 82 du moule 8. Par exemple le au moins un raidisseur peut être réalisé dans une première étape par un procédé quelconque de mise en oeuvre des matériaux composites, qui peut être différent de celui qui sera utilisé pour former la peau du panneau raidi et qui peut être différent suivant le raidisseur lorsque deux ou plusieurs raidisseurs sont utilisés pour la réalisation du panneau raidi. Ainsi un raidisseur peut être réalisé par durcissement de fibres préimprégnées dans un moule mais également par exemple par un procédé de transfert de résine RTM ou par pultrusion ou par formage. Dans ce cas le au moins un raidisseur est déposé dans l'empreinte 82, le noyau 5 est déposé dans la partie du moule 8 devant rester en creux et la peau est déposée comme déjà décrit.

Le au moins un raidisseur peut également être formé avec des fibres dans l'empreinte 82 du moule, le noyau mis en place et une peau en matériau préalablement durci rapportée sur le moule. Le au moins un raidisseur et la peau peuvent également être tous les deux préalablement réalisés en matériau durci et assemblé par collage dans le moule 8 par application du procédé, une colle étant déposée sur les surfaces du raidisseur et ou du panneau devant être assemblés. Dans ces cas, le noyau est particulièrement utile pour éviter les déformations de la peau et du raidisseur lors de l'application des pressions associées au collage, déformations qui introduiraient des contraintes résiduelles indésirables dans le matériau composite, voir des déformations permanentes du panneau raidi.

Le procédé permet également de réaliser des panneaux comportant des raidisseurs sur leurs deux faces, l'ordre dans lequel sont déposées les fibres de la peau, les fibres des raidisseurs et les noyaux sont alors déterminés par le procédé utilisé pour la mise en forme du panneau raidi.

## Revendications

1. procédé de réalisation d'un panneau raidi (1) en matériau composite, ledit panneau raidi comportant une peau (2) et au moins un raidisseur (3a, 3b), ledit matériau composite comportant des fibres enrobées d'une résine passant d'un état pâteux ou liquide à un état solide au cours d'une phase de durcissement, ledit panneau raidi (1) comportant au moins une forme en creux (4a, 4b) allongée, c'est à dire dont une dimension, la longueur, est grande devant les autres dimensions sensiblement orthogonales à la longueur, formée par des surfaces du au moins un raidisseur et de la peau, dans lequel procédé :
- le au moins un raidisseur (3a, 3b), ou une préforme dudit raidisseur, est placé dans une empreinte (82) creuse d'une surface (81) d'un moule (8) ayant la forme de la peau (2) du panneau raidi à réaliser ;
- un noyau (5) déterminant un volume correspondant en tout ou partie à la au moins une forme en creux (4a, 4b) est placé dans l'empreinte creuse de telle sorte que le raidisseur ou sa préforme se trouve entre le moule (8) et le noyau (5), ledit noyau comportant une vessie (51) en matériau souple présentant une surface extérieure délimitant un volume du noyau (5) dont les formes et les dimensions sont en accord avec le volume de la forme en creux et présentant une surface intérieure déterminant un volume de la vessie (51), lequel volume est rempli avec un matériau solide granulaire (53) ;
- le matériau (11) destiné à former la peau (2) du panneau raidi est déposé sur la surface (81) du moule (8) de sorte à recouvrir ladite surface, des semelles (32, 33) du raidisseur et une surface du noyau (5) entre lesdites semelles ;
**caractérisé en ce que** :
- le matériau solide granulaire (53) est choisi parmi des matériaux ayant un coefficient de dilatation thermique sensiblement égal au coefficient de dilatation thermique du matériau composite utilisé pour réaliser le panneau raidi (1), et ;
- une pression **Pn** d'un fluide inter-granulaire (59) contenu dans la vessie (51) est augmentée pendant la phase de durcissement de la résine de telle sorte que la pression dans le noyau **Pn** équilibre sensiblement les forces exercées par des moyens de mise en pression **Pa** du matériau composite sur la surface du moule (8) et que le volume du noyau (5) soit modifié pour compenser la diminution de l'épaisseur du matériau composite pendant la phase de durcissement.

2. Procédé suivant la revendication 1 dans lequel le noyau (5) est réalisé avec des sections dont les dimensions sont sensiblement inférieures aux dimensions de la forme en creux (4a, 4b) du panneau raidi (1).

3. Procédé suivant la revendication 2 dans lequel les dimensions de la section du noyau (5) correspondent aux dimensions de la forme en creux devant être occupée par ledit noyau avant la phase de durcissement du matériau composite.

4. Procédé suivant l'une des revendications précédentes dans lequel le matériau solide granulaire (53) est un matériau ou un mélange de matériaux dont les coefficients de dilatation thermiques sont compris entre 3 10E-6 par Kelvin et 9 10E-6 par Kelvin.

5. Procédé suivant la revendication 4 dans lequel le matériau solide granulaire (53) est un verre borosilicate.

6. Procédé suivant la revendication 4 dans lequel le matériau solide granulaire (53) est un alliage fer nickel type Invar à faible coefficient de dilatation.

7. Procédé suivant l'une des revendications précédentes dans lequel la pression **Pn** du fluide Inter-granulaire (59) contenu dans la vessie (51) est au cours d'une étape de préparation du noyau (5) diminuée de telle sorte que les parois de la vessie (51) compactent le matériau solide granulaire (53) sous l'effet des forces d'écrasement de la vessie liées à une pression s'exerçant sur la surface extérieure de la vessie en matériau souple de sorte à conférer au noyau une forme stable.

8. Procédé suivant l'une des revendications précédentes dans lequel les moyens de mise en pression du matériau composite comporte une vessie (85) extérieure soumise à une pression autoclave **Pa** et dans lequel la pression **Pn** est augmentée à une valeur sensiblement égale à la pression **Pa.**

9. Procédé suivant la revendication 8 dans lequel le fluide Inter-granulaire est soumis à la pression autoclave **Pa** de telle sorte que **Pn** soit sensiblement égal à **Pa**.

10. Procédé suivant la revendication 9 dans lequel la pression **Pn** du fluide intergranulaire est égale à la pression autoclave **Pa** corrigée pour compenser la différence entre la surface extérieure du noyau (5) soumise à la pression autoclave et la surface intérieure de la vessie (51) soumise à la pression du fluide inter-granulalre en vis à vis de ladite surface extérieure soumise à la pression autoclave.

11. Procédé suivant l'une des revendications précédentes dans lequel la résine est durcie par une cure thermique et dont le noyau (5) est rempli d'un matériau solide granulaire (53) et ou d'un fluide interstitiel (59) choisis avec un coefficient de conductivité thermique apte à assurer la diffusion de la chaleur et l'homogénéité de la température pendant la cure thermique.

12. Procédé suivant l'une des revendications précédentes dans lequel la pression **Pn** dans la vessie (51) du noyau (5) est diminuée à une valeur inférieure à la pression atmosphérique après avoir été vidée, au moins partiellement, du matériau solide granulaire (53).

## Claims

1. A method of producing a stiffened panel (1) made out of composite material, said stiffened panel comprising a skin (2) and at least one stiffener (3a, 3b), said composite material comprising fibres coated with a resin that changes from a pasty or liquid state to a solid state during a curing phase, said stiffened panel (1) comprising at least one extended hollow shape (4a, 4b), i.e. a dimension, the length, of which is significant compared to the other dimensions substantially orthogonal to the length, formed by the surfaces of at least one stiffener and of the skin, in which:
- at least one stiffener (3a, 3b), or one preform of said stiffener, is placed within a hollow enclosure (82) of a surface (81) of a mould (8) in the shape of the skin (2) of the stiffened panel being produced;
a core (5), determining a volume corresponding to all or part of at least one hollow shape (4a, 4b), is placed within the hollow enclosure so that the stiffener or its preform is located between the mould (8) and the core (5), said core comprising a bladder (51) made out of a flexible material with an outer surface defining the volume of the core (5), the shapes and dimensions of which are consistent with the volume of the hollow shape and with an inner surface defining the volume of the bladder (51), the volume of which is filled with a granular solid material (53);
- the material (11) intended to form the skin (2) of the stiffened panel is placed on the surface (81) of the mould (8) so as to cover said surface, flanges (32, 33) of the stiffener and a surface of the core (5) between said flanges;
**characterised in that**:
- the granular solid material (53) is chosen from among materials with a thermal expansion coefficient substantially equal to the thermal expansion coefficient of the composite material used to produce the stiffened panel (1), and;
- a pressure Pn of the intergranular fluid (59) contained within the bladder (51) is increased during the curing phase of the resin so that the pressure Pn within the core substantially balances the forces exerted by the Pa pressurisation means of the composite material on the surface of the mould (8) and that the volume of the core (5) becomes modified to compensate for the reduction in thickness of the composite material during the curing phase.

2. A method according to claim 1, wherein the core (5) is made from sections, the dimensions of which are substantially less than the dimensions of the hollow shape (4a, 4b) of the stiffened panel (1).

3. A method according to claim 2, wherein the dimensions of the section of the core (5) correspond to the dimensions of the hollow shape intended to accommodate said core before the curing phase of the composite material.

4. A method according to one of the previous claims, wherein the granular solid material (53) is a material or mixture of materials, the thermal expansion coefficients of which vary from 3 10E⁻⁶ per Kelvin to 9 10E⁻⁶ per Kelvin.

5. A method according to claim 4, wherein the granular solid material (53) is a borosilicate glass.

6. A method according to claim 4, wherein the granular solid material (53) is an Invar-type iron/nickel alloy with a low expansion coefficient.

7. A method according to one of the previous claims, wherein the pressure Pn of the intergranular fluid (59) contained within the bladder (51) is reduced during a core (5) preparation process, so that the walls of the bladder (51) compact the granular solid material (53) under the crushing forces from the bladder produced by a pressure being exerted on the outer surface of the bladder made out of a flexible material so as to provide the core with a stable shape.

8. A method according to one of the previous claims, wherein the pressurisation means of the composite material comprise an outer bladder (85) subjected to an autoclave pressure Pa and wherein the pressure Pn is increased to a value substantially equal to the pressure Pa.

9. A method according to claims 8, wherein the intergranular fluid is subjected to the autoclave pressure Pa so that Pn is substantially equal to Pa.

10. A method according to claim 9, wherein the pressure Pn of the intergranular fluid is equal to the autoclave pressure Pa corrected in order to compensate for the difference between the outer surface of the core (5) subjected to the autoclave pressure and the inner surface of the bladder (51) subjected to the intergranular fluid pressure with respect to said outer surface subjected to the autoclave pressure.

11. A method according to one of the previous claims, wherein the resin is cured by a thermal curing process, the core (5) of which is filled with a granular solid material (53) and/or with an interstitial fluid (59) chosen with a thermal conductivity coefficient capable of ensuring the distribution of heat and the homogeneity of the temperature during the thermal curing process.

12. A method according to one of the previous claims, wherein the pressure Pn within the bladder (51) of the core (5) is reduced to a value lower than atmospheric pressure after having been emptied, at least in part, of the granular solid material (53).

## Patentansprüche

1. Verfahren zur Herstellung einer versteiften Platte (1) aus Verbundmaterial, wobei die besagte Platte eine Hülle (2) und zumindest eine Versteifung (3a, 3b) enthält, und das besagte Verbundmaterial aus Fasern besteht, die von einem Harz umhüllt sind, das im Laufe einer Aushärtungsphase von einem zähflüssigen oder flüssigen Zustand in einen festen Zustand übergeht, wobei die besagte versteifte Platte (1) zumindest eine langgestreckte hohle Form (4a, 4b) enthält, bei der eine der Abmessungen, die Länge, gegenüber den anderen Abmessungen, die in etwa orthogonal zur Länge liegen, groß ist, und die durch die Oberflächen von zumindest einer Versteifung und der Hülle gebildet wird, wobei bei diesem Verfahren:
- zumindest eine Versteifung (3a, 3b) oder eine Preform der besagten Versteifung in einer hohlen Abformung (82) einer Oberfläche (81) einer Form (8) angeordnet ist, die die Form der Hülle (2) der herzustellenden versteiften Platte aufweist;
- ein Kern (5), der ein Volumen bildet, das vollkommen oder teilweise zumindest einer hohlen Form (4a, 4b) entspricht, so in der hohlen Abformung angebracht ist, dass sich die Versteifung oder ihre Preform zwischen der Form (8) und dem Kern (5) befindet, wobei der besagte Kern eine Blase (51) aus flexiblem Material enthält, die eine Außenfläche aufweist, die ein Volumen des Kerns (5) abgrenzt, dessen Formen und Abmessungen mit dem Volumen der hohlen Form übereinstimmen, und mit einer Innenfläche, die ein Volumen der Blase (51) bildet, wobei dieses Volumen mit einem festen körnigen Material (53) gefüllt ist;
- das Material (11), das dazu bestimmt ist, die Hülle (2) der versteiften Platte zu bilden, so auf der Oberfläche (81) der Form (8) aufgebracht wird, dass es die besagte Oberfläche, die Sohlen (32, 33) der Versteifung und eine Oberfläche des Kerns (5) zwischen den besagten Schlen bedeckt;
**dadurch gekennzeichnet, dass**:
- das feste körnige Material (53) unter jenen Materialien ausgesucht wird, die einen Wärmeausdehnungskoeffizienten aufweisen, der in etwa gleich dem Wärmeausdehnungskoeffizienten des Verbundmaterials ist, das zur Herstellung der versteiften Platte (1) verwendet wird, und;
- ein Druck **Pn** einer intergranularen Flüssigkeit (59), die in der Blase (51) enthalten ist, während der Aushärtungsphase des Harzes so angehoben wird, dass der im Kern vorherrschende Druck **Pn** in etwa jene Kräfte ausgleicht, die von den Druckvorrichtungen **Pa** des Verbundmaterials auf die Oberfläche der Form (8) ausgeübt werden, und dass das Volumen des Kerns (5) verändert wird, um die Verringerung der Verbundmaterialdicke während der Aushärtungsphase auszugleichen.

2. Verfahren nach Anspruch 1, bei dem der Kern (5) anhand von Abschnitten gefertigt wird, deren Abmessungen in etwa unter den Abmessungen der hohlen Form (4a, 4b) der versteiften Platte (1) liegen.

3. Verfahren nach Anspruch 2, bei dem die Abmessungen des Kernabschnitts (5) jenen Abmessungen der hohlen Form entsprechen, die von dem besagten Kern vor der Aushärtungsphase des Verbundmaterials einzunehmen sind.

4. Verfahren nach einem der vorherigen Ansprüche, bei dem das feste körnige Material (53) ein Material oder eine Materialmischung ist, deren Wärmeausdehnungskoeffizienten zwischen 3 10E-6 Kelvin und 9 10E-6 Kelvin liegen

5. Verfahren nach Anspruch 4, bei dem das feste körnige Material (53) Borosilikatglas ist.

6. Verfahren nach Anspruch 4, bei dem das feste körnige Material (53) eine Eisen-Nickel-Legierung vom Typ Invar mit einem geringen Wärmeausdehnungskoeffizienten ist.

7. Verfahren nach einem der vorherigen Ansprüche, bei dem der Druck **Pn** der in der Blase (51) enthaltenen intergranularen Flüssigkeit (59) im Laufe eines Vorbereitungsschrittes des Kernes (5) so gesenkt wird, dass die Wände der Blase (51) das feste körnige Material (53) unter Einwirkung der Stauchkräfte der Blase verdichten, die mit einem Druck zusammenhängen, der auf die Außenfläche der Blase aus flexiblem Material ausgeübt wird, um dem Kern eine stabile Form zu verleihen.

8. Verfahren nach einem der vorherigen Ansprüche, bei dem die Druckvorrichtungen des Verbundmaterials eine äußere Blase (85) enthalten, die einem Autoklav-Druck **Pa** unterworfen ist, und bei dem der Druck **Pn** auf einen Wert erhöht wird, der in etwa dem Wert **Pa** entspricht.

9. Verfahren nach Anspruch 8, bei dem die intergranulare Flüssigkeit einem Autoklav-Druck **Par** unterworfen wird, sodass **Pn** in etwa dem Wert **Pa** entspricht.

10. Verfahren nach Anspruch 9, bei dem der Druck **Pn** der intergranularen Flüssigkeit dem korrigierten Autoklav-Druck **Pa** entspricht, um den Unterschied zwischen der Außenfläche des Kerns, der dem Autoklav-Druck unterworfen ist, und der Innenfläche der Blase (51) auszugleichen, die dem Druck der intergranularen Flüssigkeit gegenüber der besagten Außenfläche unterworfen ist, die dem Autoklav-Druck unterliegt.

11. Verfahren nach einem der vorherigen Ansprüche, bei dem das Harz durch eine Wärmebehandlung ausgehärtet wird, und dessen Kern (5) mit einem festen körnigen Material (53) und/ oder einer interstitiellen Flüssigkeit (59) ausgefüllt ist, die entsprechend einem Wärmeausdehnungskoeffizienten ausgewählt wird, der in der Lage ist, für eine Wärmeverbreitung und eine gleichförmige Temperatur während der Wärmebehandlung zu sorgen.

12. Verfahren nach einem der vorherigen Ansprüche, bei dem der Druck **Pn** in der Blase (51) des Kerns (5) nach dem zumindest teilweisen Entleeren des festen körnigen Materials (53) auf einen Wert unter jenem des atmosphärischen Drucks verringert wird.
